# EUROPÄISCHE PATENTANMELDUNG

(11) **EP 1 380 836 A1**
(43) Veröffentlichungstag der Anmeldung: **14.01.2004**
(21) Anmeldenummer: 02090235.9
(22) Anmeldetag: 08.07.2002
(51) Int. Cl.: G01N 27/447

(54) **Prozesseinrichtung zur Beeinflussung einer Flüssigkeit und Verfahren zur Erfassung eines Prozessparameters mit einer elektrophoretischen Messanordnung**

(71) Anmelder: SIEMENS AKTIENGESELLSCHAFT, 80333 München (DE); UNIVERSITY OF MANCHESTER INSTITUTE OF SCIENCE AND TECHNOLOGY, Manchester M60 1QD (GB)
(72) Erfinder: Fielden, Peter, Prof., Bury Lancashire BL8 2TG (GB); Kretschmer, Hans-Richard, 10999 Berlin (DE)

(57) **Zusammenfassung**

Beschrieben wird eine Prozesseinrichtung der chemischen und/oder physikalischen Beeinflussung einer Flüssigkeit mit einer Messanordnung 11 zur Erfassung eines Prozessparameters der Flüssigkeit sowie ein Verfahren zu deren Betrieb. Erfindungsgemäß enthält die Einrichtung eine Messanordnung 11, die mit einem Einlass 15 an die Einrichtung 17 zur Durchführung des Prozesses angeschlossen ist, so dass vorteilhafterweise eine direkte Entnahme der zu untersuchenden Flüssigkeit über einen Schlauch 16a erfolgen kann. Die Analyse der Flüssigkeit wird durch eine in einem Trennkanal 20 erfolgende elektrophoretische Separation vorgenommen. Dadurch ist vorteilhaft eine Analyse der Flüssigkeit hinsichtlich der in dieser vorhandenen Ladungsträger mit verbesserter Aussagekraft möglich.

## Beschreibung

Die Erfindung bezieht sich auf eine an eine Prozesseinrichtung zur chemischen und/oder physikalischen Beeinflussung einer Flüssigkeit angeschlossene Messanordnung zur Erfassung eines Prozessparameters der Flüssigkeit.

Derartige Prozesseinrichtungen finden in vielen Bereichen der Verfahrenstechnik Anwendung, so z. B. in der Umweltanalytik, der Lebensmittelindustrie, der Medizintechnik, der Biotechnologie oder der Kraftwerkstechnik. Die in den zum Einsatz kommenden Vorrichtungen ablaufenden Prozesse müssen hinsichtlich bestimmter Prozessparameter überwacht werden. Gemäß der deutschen Patentanmeldung DE 44 40 580 A1 kann eine Überwachung dieser Prozessparameter beispielsweise in Rohrleitungen der Vorrichtung mittels Sensoren oder elektrochemischer Messelektroden erfolgen. Zu diesem Zweck werden die Sensoren oder Messelektroden durch Öffnungen in der Rohrwand gesteckt, um die zum Einsatz kommenden Messelemente mit der zu analysierenden Flüssigkeit in Kontakt zu bringen. Hierdurch wird eine unmittelbar parallel zum Prozess ablaufende Messung der Prozessparameter möglich. Es kann beispielsweise der Gehalt an gelösten Ionen gemessen werden.

Aufgabe der Erfindung ist es, eine Messanordnung bzw. ein Verfahren für eine unmittelbar parallel zum Prozess ablaufende Messung von Prozessparametern anzugeben, welche bzw. welches eine vergleichsweise feine Analytik von gelösten Ionen oder anderen Ladungsträgern erlaubt.

Die Aufgabe wird erfindungsgemäß dadurch gelöst, dass die Messanordnung eine nach dem Prinzip der Elektrophorese arbeitende Analysevorrichtung mit einem Reservoirkanal ist, welcher einen Einlass und einen Auslass für die Flüssigkeit aufweist und über eine weitere Öffnung mit einem Trennkanal in Verbindung steht, wobei der Einlass mit der Vorrichtung zur Durchführung des Prozesses in Verbindung steht.

Mit Hilfe der Messanordnung kann also jederzeit ein Teil der den Prozess durchlaufenden Flüssigkeit über den Einlass direkt in den Reservoirkanal abgezweigt und über die Öffnung dem Trennkanal zugefügt werden, wo mittels einer angelegten Spannung eine elektrophoretische Separation von in der Flüssigkeit enthaltenen Ladungsträgern erfolgt. Als Beispiele für elektrophoretische Separationsuntersuchungen seien die Kapilarelektrophorese und die Isotachophorese genannt.

Die elektrophoretische Separation ermöglicht vorteilhafterweise die gleichzeitige Bestimmung mehrerer Prozessparamater wie z. B. den Nachweis des Vorhandenseins verschiedener Ladungsträger in der Flüssigkeit, die durch die elektrophoretische Separation voneinander getrennt werden. Dadurch kann die beschriebene Messanordnung die Verwendung einer Mehrzahl von Sensoren erübrigen bzw. die Analyse von Prozessparametern ermöglichen, die durch bekannte Sensoren nicht möglich wären.

Durch die Verbindung der beschriebenen Messanordnung über den Einlass mit der Prozesseinrichtung ist weiterhin vorteilhaft eine prozessnahe Analytik der Prozessparameter möglich. Dadurch entfällt der Kosten- und Zeitaufwand, der mit einer Probenentnahme und einem Transport der Probe in ein Labor zur weitergehenden Untersuchung der Probe anfallen würde, wenn man nach dem Prinzip der Elektrophorese eine Analyse durchführen wollte. Mit der erfindungsgemäßen Vorrichtung ist somit eine Quasi-Online-Analytik auf sehr hohen Niveau möglich.

Gemäß einer Ausgestaltung der Erfindung steht der Auslass mit der Prozesseinrichtung in Verbindung. Hierdurch wird der Reservoirkanal zu einer Bypassleitung, d. h. dass die Flüssigkeit dem Prozess entnommen und anschließend wieder zugeführt werden kann. Hierdurch lässt sich vorteilhafterweise der mit der Messung verbundene Ausschuss minimieren, da lediglich die in dem Trennkanal untersuchte Probe verworfen werden muss.

Eine weitere Ausbildung der Vorrichtung sieht vor, dass in den Weg, den die Flüssigkeit zwischen der Prozesseinrichtung und der Verbindung zum Trennkanal zurücklegt, ein Flüssigkeitsfilter eingebracht ist und/oder eine Zuführleitung für die Analyse unterstützende Hilfsstoffe mündet. Der Flüssigkeitsfilter ermöglicht vorteilhaft eine Reinigung der zu untersuchenden Flüssigkeit, welche damit von unerwünschten Bestandteilen befreit werden kann. Insbesondere kann hierdurch eine Beeinträchtigung der Funktion des Trennkanals durch größere Partikel in der zu untersuchenden Flüssigkeit unterbunden werden. Dies ist z. B. für die Untersuchung von Abwässern in der Umweltanalytik von Bedeutung, welche Schwebstoffe enthalten, die die Funktion der Messanordnung beeinträchtigen können.

Die Zuführleitung für die Analyse unterstützende Hilfsstoffe ermöglicht vorteilhaft eine Aufbereitung der zu analysierenden Flüssigkeit. Hierdurch können Aufbereitungsschritte, die ansonsten in einem Labor stattfinden müssten, in die Funktionalität der Messanordnung integriert werden. Die Aufbereitung kann beispielsweise in einer Verdünnung z. B. durch Zugabe von Wasser oder in einer Verschiebung des PH-Wertes durch Zugabe eines Elektrolytes bestehen.

Die Erfindung bezieht sich weiterhin auf einen Prozess zur chemischen und/oder physikalischen Beeinflussung einer Flüssigkeit mit einer Messung zur Erfassung eines Prozessparameters der Flüssigkeit.

Ein solches Verfahren ist ebenfalls aus der oben angegebenen deutschen Patentanmeldung DE 199 48 049 A1 bekannt.

Das erfindungsgemäße Verfahren löst die oben angegebene Aufgabe dadurch, dass zur Messung eine nach dem Prinzip der Elektrophorese arbeitende Analysevorrichtung verwendet wird, mit einem Reservoirkanal, welcher einen Einlass und einen Auslass für die Flüssigkeit aufweist und über eine weitere Öffnung mit einem Trennkanal in Verbindung steht, wobei die Flüssigkeit durch den Einlass dem Prozess entnommen wird.

Die sich hierdurch ergebenen Vorteile sind sinngemäß bereits im Zusammenhang mit dem unabhängigen Vorrichtungsanspruch erläutert worden.

Eine Ausbildung des Verfahrens sieht vor, dass die Flüssigkeit nach der Entnahme aus dem Prozess und vor dem Erreichen der weiteren Öffnung in dem Reservoirkanal manipuliert und/oder filtriert wird. Eine derartige Aufbereitung der Probe verbessert vorteilhaft die Analyseergebnisse. Eine Manipulation kann beispielsweise durch Zugabe von Hilfsstoffen erfolgen. Weiterhin ist beispielsweise eine Erwärmung oder Kühlung der zu analysierenden Flüssigkeit denkbar.

Gemäß einer weiteren Ausbildung des Verfahrens wird die durch den Auslass austretende Flüssigkeit verworfen. Dies hat den Vorteil, dass die zu analysierende Flüssigkeit beliebig mit Hilfsstoffen versetzt werden kann, ohne den Prozess zu beeinflussen. Damit kann die Messanordnung beispielsweise auch in der Lebensmittelindustrie wie der Bierherstellung verwendet werden, ohne die Anforderungen an die Reinhaltung des Prozesses zu verletzen.

Gemäß einer weiteren Ausgestaltung des Verfahrens erfolgt die Entnahme der Flüssigkeit durch den Einlass kontinuierlich. Hierdurch kann vorteilhafterweise eine sehr prozessnahe Analyse der Flüssigkeit erfolgen, da die Flüssigkeit im Reservoirkanal ständig ausgetauscht wird und damit mit der sich augenblicklich im Prozess befindlichen Flüssigkeit hinsichtlich ihrer Zusammensetzung übereinstimmt.

Eine weitere Ausgestaltung des Verfahrens sieht vor, dass die Entnahme der Flüssigkeit durch den Einlass in bestimmten Zeitabständen durch Öffnen eines Ventilmechanismus erfolgt. Dies ist besonders dann vorteilhaft, wenn eine Analyse nur in längeren Zeitabständen notwendig ist, da in den Intervallen zwischen den Messungen dem Prozess keine Flüssigkeit entnommen wird, wodurch die Prozessausbeute steigt.

Eine letzte Ausgestaltung des erfindungsgemäßen Verfahrens sieht vor, dass der Druck in der Analysevorrichtung im Vergleich zum in der Vorrichtung zur Durchführung des Prozesses herrschenden Druck vermindert wird. Dies hat den Vorteil, dass der in der Messanordnung herrschende Druck unabhängig von dem erforderlichen Prozessdruck ist. Insbesondere kann die Messanordnung vor einem zu hohen Prozessdruck geschützt werden.

Weitere Einzelheiten der Erfindung werden im Folgenden anhand der Zeichnung beschrieben. Hierbei zeigen
- Figur 1: ein Ausführungsbeispiel einer Messanordnung, die an einer Rohrleitung einer Prozesseinrichtung angeschlossen ist, in perspektivischer Darstellung,
- Figur 2: ein weiteres Ausführungsbeispiel der Messanordnung als schematische Aufsicht und
- Figur 3: ein letztes Ausführungsbeispiel der Messanordnung als schematische Aufsicht.

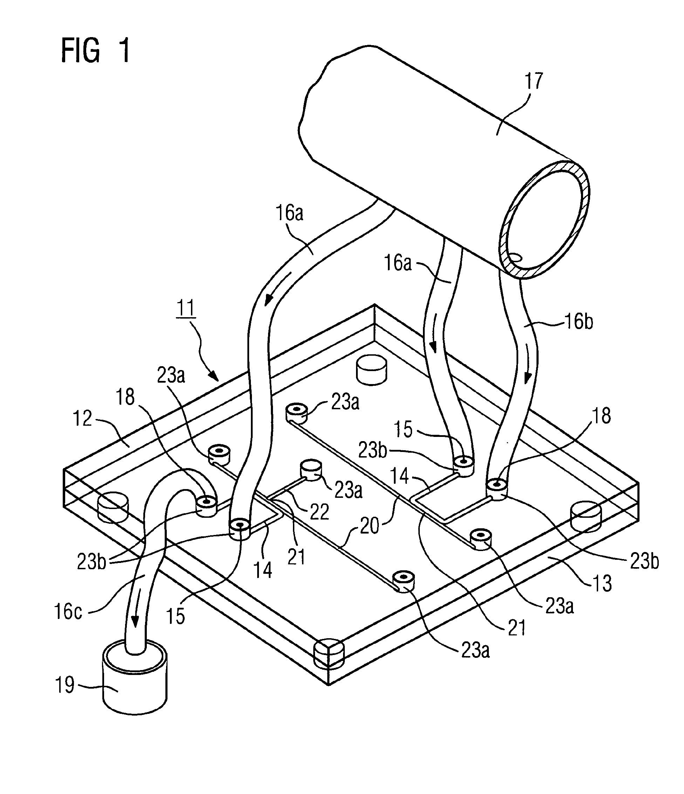

In Figur 1 ist eine Messanordnung 11 dargestellt, welche in mikromechanischer Bauweise hergestellt ist. Sie besteht aus einer transparenten Platte 12, in die die für die Messanordnung notwendigen Kanalstrukturen durch Ätzen hergestellt sind. Die Kanalstrukturen werden durch eine weitere Platte 13 verschlossen, die durch Bonden mit der Platte 12 verbunden ist.

Die Kanalstrukturen in der Platte 12 bestehen aus zwei Reservoirkanälen 14, welche über jeweils einen Einlass 15 mittels Schläuchen 16a mit einer Rohrleitung 17 verbunden sind, die Teil einer nicht näher dargestellten Prozesseinrichtung der chemischen und/oder physikalischen Beeinflussung einer Flüssigkeit sind. Durch die Schläuche können die Reservoirkanäle entsprechend der angedeuteten Pfeilrichtung mit dem Prozessfluid versorgt werden.

Die Prozesseinrichtung kann beispielsweise eine Braueinrichtung für Bier, ein Bioreaktor, eine Kläreinrichtung für Abwässer oder auch eine Anlage zur Herstellung von Medikamenten sein.

Die Reservoirkanäle 14 enden in Auslässen 18, welche beispielsweise über einen Schlauch 16b mit der Rohrleitung 17 verbunden sein können, um eine Rückführung der zu analysierenden Flüssigkeit in den Prozess zu ermöglichen, oder über einen Schlauch 16c mit einem Abfallbehälter 19 verbunden sein können, wobei die zu analysierende Flüssigkeit als Ausschuss entsorgt wird.

Trennkanäle 20 sind über Öffnungen 21 mit den Reservoirkanälen 14 verbunden, so dass durch die Öffnungen eine Probe aus den Reservoirkanälen 14 in die Trennkanäle 20 gelangen kann. Um diesen Vorgang zu unterstützen, ist gegenüber einer der Öffnungen 21 ein Hilfskanal 22 angeordnet.

Eine Befüllung der Trennkanäle 20 bzw. des Hilfskanals 22 mit zur Analyse notwendigen Elektrolyten erfolgt über Ventilmechanismen 23a. Ebenso erfolgt über die Ventilmechanismen das Anlegen von Spannungen, welche zur elektrophoretischen Separation der in der zu analysierenden Flüssigkeit enthaltenen Ladungsträger führt. Die separierten Ladungsträger können in nicht näher dargestellten Messfeldern, die der Trennkanal durchläuft, beispielsweise optisch oder durch Ermittlung der Leitfähigkeit der Probe im Trennkanal 20 detektiert werden.

Weitere Ventilmechanismen 23b sind an den Enden der Reservoirkanäle 14 angeordnet, um einen Fluss des zu analysierenden Fluids zu stoppen bzw. eine Druckverminderung im Reservoirkanal im Vergleich zur Rohrleitung 17 zu erreichen. Eine Druckverminderung kann alternativ auch beispielsweise durch eine Drossel (nicht dargestellt) erreicht werden.

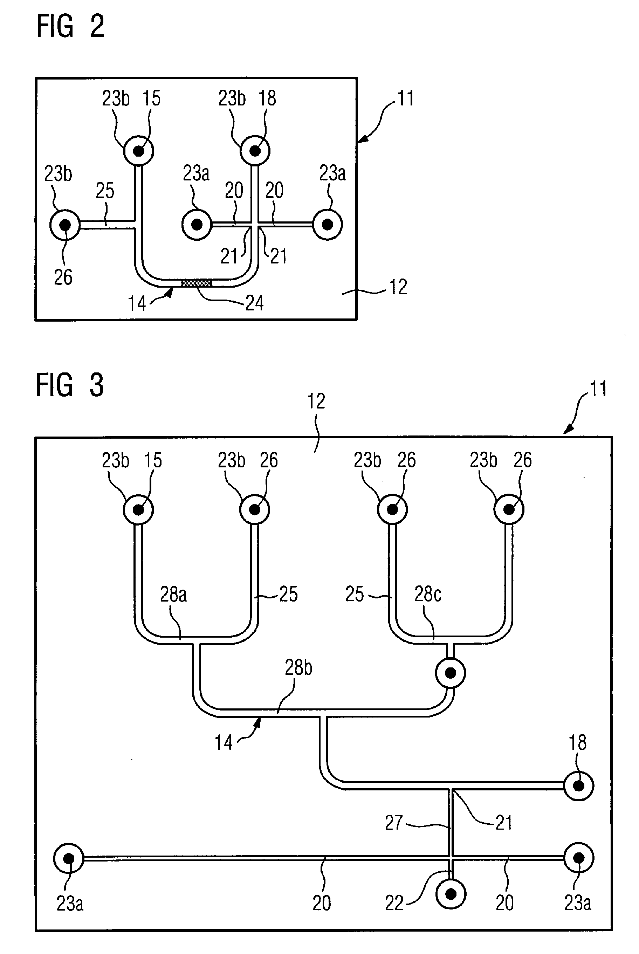

In den Figuren 2 und 3 sind alternative Geometrien der Kanalstrukturen dargestellt, die in Messanordnungen 11 mit einem der Messanordnung gemäß Figur 1 entsprechenden Aufbau aus zwei gebondeten Platten aufweisen. Entsprechende Teile der Messanordnungen sind mit der Figur 1 entsprechenden Bezugszeichen versehen und werden nicht nochmals erläutert.

In Figur 2 ist eine besonders einfach aufgebaute Messanordnung 11 dargestellt. Der Trennkanal 20 durchdringt den Reservoirkanal 14 direkt, so dass bei Anlegung einer Spannung an die Ventile 23a eine Separation des sich in diesem Augenblick in dem Reservoirkanal befindlichen Probenvolums in den Trennkanal 20 hinein erfolgt. In dem Reservoirkanal ist weiterhin ein Flüssigkeitsfilter 24 angeordnet, der aus einer auswechselbaren Glasfritte besteht. Außerdem ist eine Zuführleitung 25 vorgesehen, die über einen Hilfsstoffeinlass 26 mit einem Hilfsstoff beschickt werden kann, die dem Reservoirkanal über die Zuführleitung 25 zugesetzt wird.

In der Ausführungsform gemäß Figur 3 ist zwischen der Öffnung 21 und dem Trennkanal 20 ein Verbindungskanal 27 vorgesehen. Dieser stellt eine Verlängerung des Hilfskanals 22 dar, wobei diese beiden Kanäle durch den Trennkanal 20 gekreuzt werden.

Der Reservoirkanal 14 wird durch drei zusammenhängende, U-förmige Kanalabschnitte 28a, b, c gebildet, wodurch zusätzliche Verzweigungen entstehen, die als Zuführleitung 25 verwendet werden können.

## Patentansprüche

1. An eine Prozesseinrichtung zur der chemischen und/oder physikalischen Beeinflussung einer Flüssigkeit angeschlossene Messanordnung zur Erfassung eines Prozessparameters der Flüssigkeit,
**dadurch gekennzeichnet**,
das die Messanordnung eine nach dem Prinzip der Elektrophorese arbeitende Analysevorrichtung mit einem Reservoirkanal (14) ist, welcher einen Einlass (15) und einen Auslass (18) für die Flüssigkeit aufweist und über eine weitere Öffnung (21) mit einem Trennkanal (20) in Verbindung steht, wobei der Einlass (15) mit der Vorrichtung zur Durchführung des Prozesses in Verbindung steht.

2. Vorrichtung nach Anspruch 1,
**dadurch gekennzeichnet,**
**dass** der Auslass (18) mit der Prozesseinrichtung in Verbindung steht.

3. Vorrichtung nach einem der vorangehenden Ansprüche,
**dadurch gekennzeichnet**,
das in den Weg, den die Flüssigkeit zwischen der Prozesseinrichtung und der Verbindung zum Trennkanal (20) zurücklegt, ein Flüssigkeitsfilter (24) eingebracht ist und/oder eine Zuführleitung (25) für die Analyse unterstützende Hilfsstoffe mündet.

4. Prozess zur chemischen und/oder physikalischen Beeinflussung einer Flüssigkeit mit einer Messung zur Erfassung eines Prozessparameters der Flüssigkeit,
**dadurch gekennzeichnet,**
**dass** zur Messung eine nach dem Prinzip der Elektrophorese arbeitende Analysevorrichtung verwendet wird, mit einem Reservoirkanal (14), welcher einen Einlass (15) und einen Auslass (18) für die Flüssigkeit aufweist und über eine weitere Öffnung (21) mit einem Trennkanal (20) in Verbindung steht, wobei die Flüssigkeit durch den Einlass (15) dem Prozess entnommen wird.

5. Verfahren nach einem der Ansprüche 4
**dadurch gekennzeichnet,**
**dass** die Flüssigkeit nach der Entnahme aus dem Prozess und vor dem Erreichen der weiteren Öffnung (21) in dem Reservoirkanal manipuliert und/oder filtriert wird.

6. Verfahren nach Anspruch 4 oder 5,
**dadurch gekennzeichnet,**
**dass** die durch den Auslass (18) austretende Flüssigkeit verworfen wird.

7. Verfahren nach einem der Ansprüche 4 bis 6,
**dadurch gekennzeichnet,**
**dass** die Entnahme der Flüssigkeit durch den Einlass (15) kontinuierlich erfolgt.

8. Verfahren nach einem der Ansprüche 4 bis 6,
**dadurch gekennzeichnet,**
**dass** die Entnahme der Flüssigkeit durch den Einlass (15) in bestimmten Zeitabständen durch Öffnen eines Ventilmechanismus (23b) erfolgt.

9. Verfahren nach einem der Ansprüche 4 bis 8,
**dadurch gekennzeichnet,**
**dass** der Druck in der Analysevorrichtung im Vergleich zum in der Vorrichtung zur Durchführung des Prozesses herrschenden Druck vermindert wird.
